# EUROPÄISCHE PATENTSCHRIFT

(11) **EP 1 964 700 B1**
(45) Veröffentlichungstag und Bekanntmachung des Hinweises auf die Patenterteilung: **22.09.2010**
(21) Anmeldenummer: 08003581.9
(22) Anmeldetag: 27.02.2008
(51) Int. Cl.: B60J 1/20

(54) **Fahrzeugfensterrollo**
Roller blind for vehicle window
Store de fenêtre de véhicule

(30) Priorität: 28.02.2007 DE 202007002959 U
(43) Veröffentlichungstag der Anmeldung: 03.09.2008
(73) Patentinhaber: HS Products Engineering GmbH, 82239 Alling (DE)
(72) Erfinder: Zeigenbein, Werner, 81929 München (DE)
(74) Vertreter: Wietzke, Andreas

(56) Entgegenhaltungen:
- EP-A- 1 306 251
- EP-A- 1 619 057
- EP-A- 1 800 923
- EP-A- 1 872 989
- EP-A- 1 886 853
- EP-A- 1 897 714
- WO-A-2007/139151
- DE-A1-102005 021 399
- DE-U1-202004 019 844
- DE-U1-202006 017 839
- FR-A- 2 888 168

## Beschreibung

Die Erfindung betrifft ein Fahrzeugfensterrollo mit einer Rollobahn zum zumindest teilweisen Abdecken eines Fahrzeugfensters, einer Wickeleinrichtung zum Auf- und Abwickeln der Rollobahn, einer Hubeinrichtung, welche am aus- und einziehbaren Rollobahnende angreift, und einer Antriebseinrichtung, welche die Hubeinrichtung antreibt.

Aus EP 1 645 448 A1 ist ein derartiges Fensterrollo bekannt, bei dem an beiden Enden des ausziehbaren Rollobahnendes die Hubeinrichtung angreift.

Aus der EP 1 306 251 ist ein geteiltes Fensterrollo für Kraftfahrzeuge bekannt, welches Bürstenkabel für den Antrieb eines Fensterrollos verwendet. Die Verwendung solcher Bürstenkabel ist mit großen Nachteilen behaftet, da einerseits hohe Geräuschemission, andererseits hohe Reibungsverluste beim Antrieb entstehen.

Aus der DE 20 2006 017 839 U1 ist ein Fensterrollo mit Antrieb über den Fensterheber bekannt. Das dort dargestellte Fensterrollo verbindet eine feste Schubstange, wobei ein sehr aufwendiger und raumgreifender Antrieb für die Schubstange vorgesehen ist, welcher fast den gesamten Raum hinter der Türinnenverkleidung benötigt.

Aus der DE 10 2005 021 399 A1 ist ein Rollo für Fahrzeugfenster bekannt, welches zwei starre Schubstangen über Bürstenkabel antreibt. Hierbei sind die Schubstangen links und rechts des Rollobahnendes und die Antriebseinrichtung wiederum über Bürstenkabel zentral im mittleren Bereich hinter der Türinnenverkleidung angeordnet. Auch eine solche Vorrichtung benötigt viel Platz im Inneren der Tür.

Aufgabe der Erfindung ist es, ein Fahrzeugfensterrollo der eingangs genannten Art zu schaffen, bei welchem die Bewegungsübertragung von der Antriebseinrichtung auf das ausziehbare Rollbahnende mit einfachen Mitteln erfolgt, wobei insbesondere die Montage des Fensterrollos erleichtert wird.

Diese Aufgabe wird erfindungsgemäß durch die Merkmale des Schutzanspruches 1 gelöst.

Die Unteransprüche beinhalten vorteilhafte Weiterbildungen der Erfindung.

Bei der Erfindung weist die Hubeinrichtung wenigstens eine Schubstange auf, welche mit dem aus- und einziehbaren Rollobahnende, welches vorzugsweise als starrer Auszugsstab ausgebildet ist, verbunden ist. Vorzugsweise kommt nur eine einzige Schubstange zum Einsatz, wobei diese etwa in der Mitte des ausziehbaren Rollobahnendes angreift. Das von der Antriebseinrichtung vermittelte Antriebsmoment wird über eine Antriebsübertragungseinrichtung auf die Schubstange übertragen. Die Antriebsübertragungseinrichtung kann ein Antriebsrad aufweisen, mit welchem die Schubstange in Antriebsverbindung steht. Hierzu kann die Schubstange über eine Verzahnung mit dem als Zahnrad ausgebildeten Antriebsrad in Antriebsverbindung stehen. Die Verzahnung kann an der Schubstange vorgesehen sein und sich in Längsrichtung der Schubstange erstrecken. Die Verzahnung kann jedoch auch an einem mit der Schubstange fest verbundenen biegbaren Antriebsstrang vorgesehen sein, wobei der Antriebsstrang in einer Führungseinrichtung geführt wird, die außerhalb insbesondere unterhalb der abzudeckenden Fensterfläche angeordnet ist.

Ferner ist es möglich, die Schubstange über einen Seiltrieb bzw. über ein Seilgetriebe anzutreiben, wobei das Antriebsrad als Seilrolle ausgebildet ist, auf welcher bei der Bewegung der Schubstange das Zugseil aufgewickelt wird und von welcher das Zugseil abgewickelt wird.

Für eine vereinfachte Montage oder Demontage kann die Schubstange erfindungsgemäß auswechselbar in der Hubeinrichtung angeordnet sein. Hierzu kann die Schubstange in einer mit einem Gehäuse der Wickeleinrichtung fest verbundenen Führungseinrichtung in vertikaler Richtung geführt werden, wobei die Führungseinrichtung ein lösbares Arretierelement aufweist, welches in einem Führungsschacht der Führungseinrichtung eine Führungsfläche für die Schubstange bildet. Das lösbare Arretierelement kann eine Anschlagfläche aufweisen, an welcher die Schubstange mit einem Anschlag bei voller Auszugslänge anliegt.

Zur weiteren Vereinfachung der Montage und Demontage kann die Schubstange mit der Antriebsübertragungseinrichtung über ein Verbindungsteil verbunden sein, wobei das Verbindungsteil vorzugsweise in der Antriebsübertragungseinrichtung oder der Hubeinrichtung vormontierbar ist. Hierzu kann die Schubstange mit dem vormontierten Verbindungsteil für die Bewegungen in beiden vertikalen Richtungen verbunden sein oder nach der Vormontage zu verbinden sein. Hierbei kann die Schubstange mit dem Verbindungsteil lösbar zu verbinden sein. Dies kann beispielsweise dadurch erreicht werden, dass ein in das Verbindungsteil einsetzbares Eingriffsteil der Schubstange durch Verdrehen in eine Eingriffsstellung zum Verbinden der Schubstange mit dem Verbindungsteil bewegbar ist. Durch weiteres Verdrehen oder Zurückdrehen des Eingriffsteils kann die Schubstange vom Verbindungsteil wieder gelöst werden. Das Eingriffsteil ist vorzugsweise am unteren Ende der Schubstange vorgesehen. Das obere Ende der Schubstange kann ebenfalls lösbar mit dem ausziehbaren Rollobahnende, insbesondere dem Zugstab verbunden sein.

Ferner kann die Antriebsübertragungseinrichtung, insbesondere der Antriebsstrang oder ein Seilende des Seiltriebs mit dem vormontierten Verbindungsteil verbunden sein oder nach der Vormontage zu verbinden sein. Auch diese Verbindung ist vorzugsweise lösbar ausgebildet. Zur lösbaren Verbindung der Schubstange und/oder der Antriebsübertragungseinrichtung, insbesondere des Antriebsstranges oder des Zugseiles kann durch eine selbsttätige Arretiereinrichtung, welche die Verbindung mit dem Verbindungsteil herstellt, erreicht werden. In bevorzugter Weise werden die beiden unten liegenden Enden der Schubstange und des Antriebsstranges bzw. des Seils des Seiltriebes durch das Verbindungsteil miteinander verbunden.

Die Hubeinrichtung kann ferner einen Auslaufschacht aufweisen, in welchem die Schubstange unterhalb der abzudeckenden Fensterfläche, beispielsweise innerhalb einer Türverkleidung beispielsweise einer Fahrzeugtür geführt wird. Bei der Vormontage kann das Verbindungsteil in diesem Auslaufschacht vormontiert sein.

Ferner kann die Antriebsübertragungseinrichtung in erfinderischer Ausgestaltung zwei Bauteilegruppen aufweisen, von denen die eine Bauteilegruppe mit der Hubeinrichtung eine vormontierte Baueinheit und die andere Bauteilegruppe eine mit der Antriebseinrichtung vormontierte Baueinheit bilden. Beim Einbau des Fensterrollos in eine Fahrzeugtür sind die beiden Bauteilegruppen derart ausgebildet, dass bei der Montage der Türverkleidung die beiden Bauteilegruppen miteinander zu verbinden sind. Hierzu kann die Antriebsübertragungseinrichtung ein Getriebe aufweisen, in welchem die Verbindungsstelle für die beiden vormontierten Bauteilegruppen vorhanden ist. Die erste vormontierte Bauteilegruppe der Antriebsübertragungseinrichtung enthält vorzugsweise die Schubstange, die Führungseinrichtung für die Schubstange, das Antriebsrad und den Antriebsstrang bzw. den Seiltrieb. Außerdem kann die erste vormontierte Baueinheit ferner den Auslaufschacht und das darin angeordnete Verbindungsteil aufweisen. Die zweite vormontierte Bauteilegruppe der Antriebsübertragungseinrichtung beinhaltet ein mit der Antriebseinrichtung, insbesondere dem Elektromotor zu verbindendes Zahnradgetriebe, welches vorzugsweise als Kegelradgetriebe oder als Stirnschraubradpaar oder als Schneckenradsatz ausgebildet sein kann.

Anhand der Figuren wird an einem Ausführungsbeispiel die Erfindung noch näher erläutert.

Es zeigt
- Fig. 1: eine Seitenansicht eines Fahrzeugfensterrollos, welches ein Ausführungsbeispiel der Erfindung ist;
- Fig. 2: eine Ausführungsform für eine Hubeinrichtung, welche beim Ausführungsbeispiel der Fig. 1 zur Anwendung kommen kann;
- Fig. 3: Bestandteile der Hubeinrichtung der Fig. 2;
- Fig. 4: eine schnittbildliche Darstellung der in Fig. 3 dargestellten Bestandteile der Hubeinrichtung;
- Fig. 5: eine schnittbildliche Darstellung eines Teils der in Fig. 2 dargestellten Hubeinrichtung;
- Fig. 6: in perspektivischer Darstellung eine weitere Ausführungsform einer Hubeinrichtung;
- Fig. 7: eine Detaildarstellung eines Bauteils der in Fig. 6 dargestellten Hubeinrichtung;
- Fig. 8: ein Ausführungsbeispiel für eine Antriebsübertragungseinrichtung, welche beim Ausführungsbeispiel der Fig. 1 zur Anwendung kommen kann, und
- Fig. 9: eine weitere Ausführungsform für eine Hubeinrichtung in schematischer Darstellung.

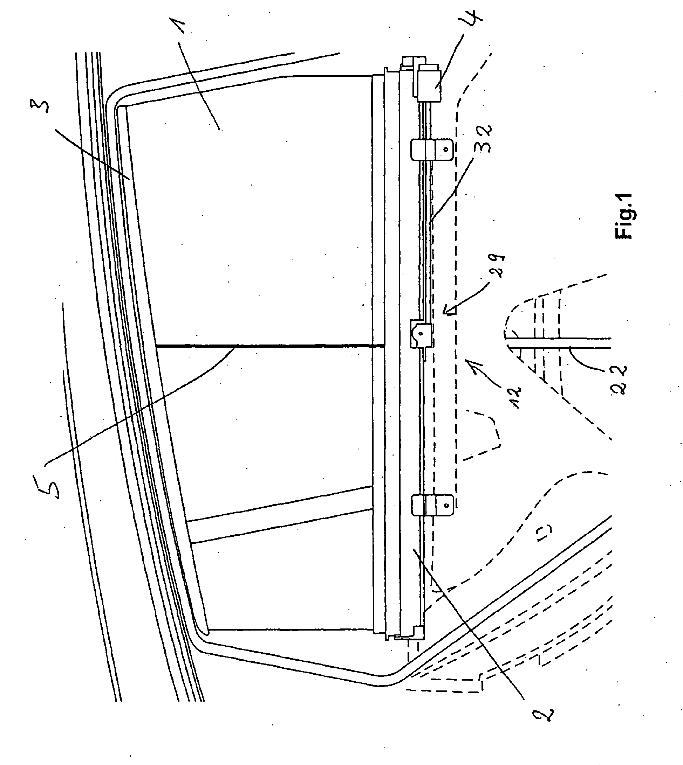

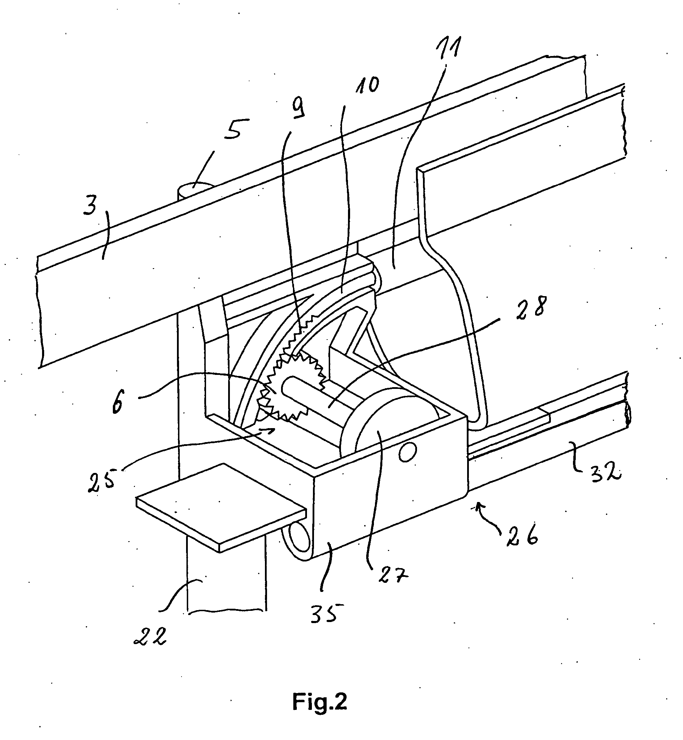

Das in Fig. 1 gezeigte Fahrzeugfensterrollo beinhaltet eine Rollobahn 1, welche im ausgezogenen Zustand zum Abdecken eines Fahrzeugfensters dargestellt ist. Hierzu wird die Rollobahn 1 aus einer Wickeleinrichtung 2, welche entlang einer unteren Fensterkante eines Fahrzeugfensters, beispielsweise in einer Fahrzeugtür angeordnet ist, mittels einer Hubeinrichtung 12, welche im einzelnen noch erläutert wird, in die in die Fig. 1 abgewickelte Stellung oder in die in die Wickeleinrichtung 2 aufgewickelte Stellung gebracht. Die Hubeinrichtung (Fig. 2) beinhaltet hierzu eine Schubstange 5, welche etwa in der Mitte der Rollobahn angeordnet ist und am ausziehbaren Rollobahnende 3, welche beim Ausführungsbeispiel als Zugstab ausgebildet ist, angreift. Die Verbindung der Schubstange 5 mit dem Zugstab am Rollobahnende 3 ist vorzugsweise als lösbare Verbindung ausgebildet und kann durch Arretieren, Clipsen oder dergleichen hergestellt werden. Die für das Auf- und Abwickeln der Rollobahn 1 erforderliche Antriebskraft wird von einer Antriebseinrichtung 4 geliefert, welche als Elektromotor, insbesondere Gleichstrommotor ausgebildet ist. Das Drehmoment, welches von der Antriebseinrichtung 4 geliefert wird, wird über eine Antriebsübertragungseinrichtung 29, welche eine von der Antriebseinrichtung 4 zur Hubeinrichtung 12 sich erstreckende flexible Welle 32 sowie die Hubeinrichtung 12 aufweist, auf das ausziehbare Rollobahnende 3 übertragen.

Die Antriebsübertragungseinrichtung 29 beinhaltet ferner ein Getriebe 25, welches das über die flexible Welle 32 von der Antriebseinrichtung 4 gelieferte Antriebsmoment auf die Hubeinrichtung 12 überträgt. Das Getriebe 25 beinhaltet hierzu ein Zahnradgetriebe 26, welches als Schneckenradsatz mit einer drehfest mit der Welle 32 verbundenen Schnecke 31 und ein Schneckenrad als Ausgangszahnrad 27 aufweist. Das Zahnradgetriebe kann auch als Kegelradpaar oder Stirnschraubradpaar ausgebildet sein.

Das Getriebe 25 beinhaltet ferner eine Verbindungswelle 28, deren eines Ende drehfest mit dem Ausgangszahnrad verbunden ist. Das andere Wellenende ist drehfest mit einem Antriebsrad 6 verbunden, welches beim Ausführungsbeispiel der Fig. 2 als Zahnrad ausgebildet ist. Durch das Getriebe 25 wird die Übertragung des Antriebsmoments von der als flexible Welle 32 ausgebildeten Ausgangswelle der Antriebseinrichtung 4 auf das um eine zur Ausgangswelle senkrechte Achse drehbares Antriebsrad 6 gewährleistet.

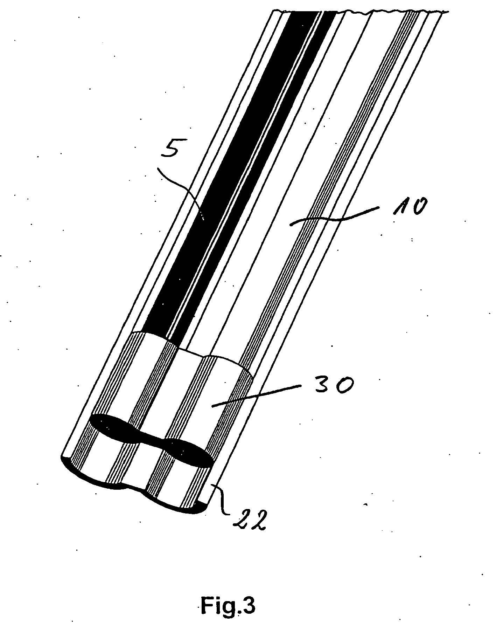

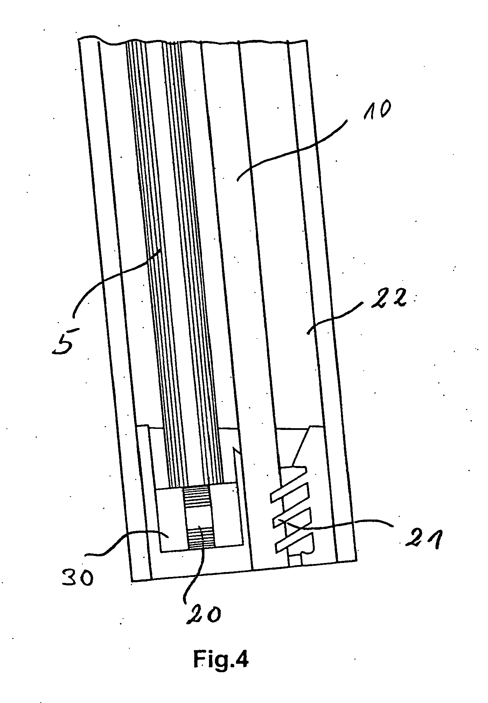

Mit der Verzahnung des Antriebsrades 6 kämmt eine Verzahnung 9 an einem biegbaren Antriebsstrang 10. Der Antriebsstrang ist nach Art einer flexiblen bzw. biegbaren Zahnstange ausgebildet. Der Antriebsstrang 10 ist an seinem Ende (unteres Ende) mit der Schubstange 5 verbunden, wie aus den Fig. 3 und 4 zu ersehen ist. Die Verbindung der Schubstange 5 mit dem Antriebsstrang 10 erfolgt an den unteren Enden dieser Bauteile mittels eines Verbindungsteils 30. Die Schubstange 5 und der biegbare Antriebsstrang 10 werden unterhalb der unteren Fensterkante des abzudeckenden Fahrzeugfensters mit einem sich im wesentlichen vertikal erstreckenden Auslaufschacht 22 geführt. Der Auslaufschacht 22 kann sich im Feuchtraum der Fahrzeugtür erstrecken. Wie aus Fig. 1 zu ersehen ist, wird beim Anheben der Schubstange 5 diese in vertikaler Richtung über die untere Fensterkante hinausgeschoben. Für die Bewegung der Schubstange wird das Antriebsmoment der Antriebseinrichtung 4 über die flexible Welle 32 auf das Getriebe 25 übertragen. Vom Antriebsrad 6 wird die Antriebskraft über den Antriebsstrang 10 und das Verbindungsteil 30 auf die Schubstange 5 übertragen. Für die vertikalen Bewegungen ist die Schubstange 5 ferner in einer ortsfesten Führung 14 der Hubeinrichtung geführt. Die Antriebseinrichtung 4 kann zwei angetriebene Drehrichtungen aufweisen, so dass die Antriebskraft sowohl beim Abwickeln der Rollobahn 1 als auch beim Aufwickeln der Rollobahn über die Antriebsübertragungseinrichtung 29 und die Hubeinrichtung 12, welche die oben beschriebenen Bauteile aufweisen, übertragen wird.

Der biegbare Antriebsstrang 10 wird bei der Hubbewegung außerhalb des abzudeckenden Fahrzeugfensters, insbesondere unterhalb der unten liegenden Fensterkante in einer Führungseinrichtung 11 geführt. Diese Führungseinrichtung 11 erstreckt sich etwa parallel zur unten liegenden Fensterkante. Hierzu wird der Antriebsstrang etwa im rechten Winkel aus dem Auslaufschacht 22 über das Antriebsrad 6 in die Führungseinrichtung 11 geführt.

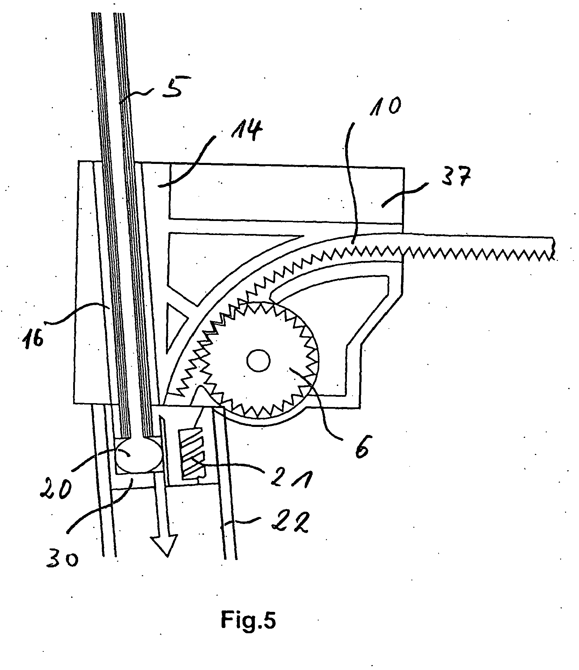

Wie aus den Fig. 4 und 5 zu ersehen ist, sind die Schubstange 5 und der Antriebsstrang 10 lösbar mit dem Verbindungsteil 30 verbunden. Die Schubstange 5 weist hierzu ein abgeflachtes etwa scheibenförmiges Eingriffsteil 20 auf, welches durch einen Schlitz im Verbindungsteil 30 von oben eingesteckt werden kann. Durch Verdrehen um 90° wird das Eingriffsteil 20 in seine Eingriffsstellung mit dem Verbindungsteil 30 gebracht, wie es in Fig. 4 dargestellt ist. In der Fig. 5 ist die Drehwinkelposition des Eingriffsteil 20 in der Stellung gezeigt, in welcher das Einschieben in das Verbindungsteil 30 oder das Herausziehen aus dem Verbindungsteil 30 erfolgen kann.

Die Verbindung des biegbaren Antriebsstranges 10 mit dem Verbindungsteil 30 erfolgt durch eine selbsttätige Arretiereinrichtung 21, welche entgegen der Auszugsrichtung nach unten gerichtete Eingriffslamellen aufweist, die beim Herunterfahren oder Einstecken des Antriebsstranges mit dem unteren Ende des Antriebsstranges 10 in arretierenden Eingriff kommen (Fig. 4). Diese selbsttätige Verrastung kann dann erfolgen, wenn mit Hilfe des vom Antriebsrad 6 übertragenen Antriebsmomentes der Antriebsstrang 10 erstmalig in den Auslaufschacht 22 nach unten gefahren wird. Bei der Verbindung der Schubstange 5 und des Antriebsstranges 10 mit dem Verbindungsteil 30 befindet sich das Verbindungsteil 30 in vormontiertem Zustand, insbesondere am unteren Ende des Auslaufschachtes 22. Der Auslaufschacht 22 besitzt hierzu einen entsprechenden Anschlag, an welchem das vormontierte Verbindungsteil 30 anliegt. Hierzu kann der Auslaufschacht am unteren Ende teilweise oder ganz geschlossen sein.

Zum Lösen des Antriebsstranges 10 vom Verbindungsteil 30 wird die Schubstange 5 in Pfeilrichtung (Fig. 5) nach unten gestoßen. Hierdurch wird der arretierende Eingriff der Arretiereinrichtung 21 mit dem unteren Ende des Antriebsstranges 10 gelöst. Wenn das Eingriffsteil 20 in die in Fig. 5 dargestellte Position gedreht ist, kann es ebenfalls durch den oben liegenden Schlitz im Verbindungsteil 30 herausgezogen werden. Auf diese Weise erreicht man ein einfaches Trennen der Schubstange 5 und des Antriebsstranges 10 vom Verbindungsteil 30 und damit eine einfache Demontage dieser Bauteile aus der Hubeinrichtung 12.

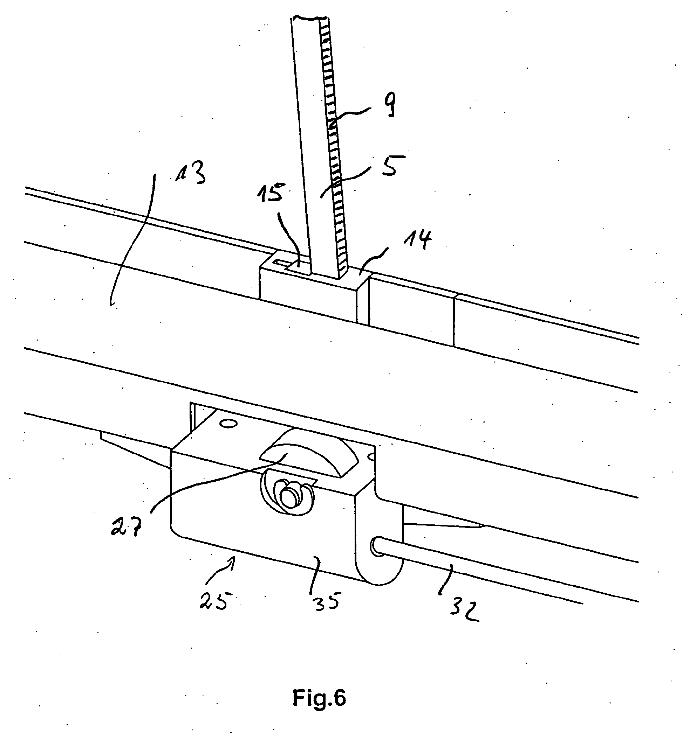

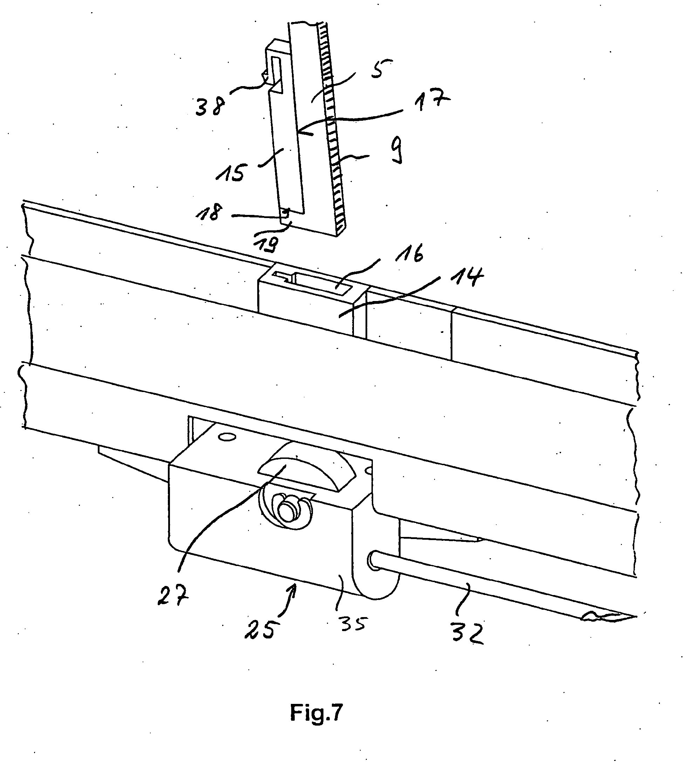

In den Fig. 6 und 7 ist eine weitere Ausführungsform der Hubeinrichtung 12 dargestellt. Bei dieser Ausführungsform ist an der Schubstange 5 die Verzahnung 9 befestigt. Die Verzahnung 9 erstreckt sich in Längsrichtung der Schubstange 5 und befindet sich an einer Längsseite der Schubstange 5. Die Verzahnung 9 steht für die Bewegung der Schubstange 5 in den beiden vertikalen Richtungen in kämmenden Eingriff mit dem Antriebsrad 6, welches in den Fig. 6 und 7 nicht sichtbar ist, jedoch so ausgebildet ist, wie im Ausführungsbeispiel der Fig. 2 und mit dem Getriebe 25 in der gleichen Weise verbunden ist. Wie beim Ausführungsbeispiel der Fig. 2 wird die Schubstange 5 in der Führungseinrichtung 14 in vertikaler Richtung geführt. Die Führungseinrichtung 14 mündet in den Auslaufschacht 22. Ein Führungsschacht 16 fluchtet somit mit dem Auslaufsschacht 22. Bei der Montage der Schubstange 5 wird diese zusammen mit einem Arretierelement 15 in den Führungsschacht 16 eingesteckt (Fig. 7). Am Arretierelement 15 ist ein federnde Arretiervorsprung 38 vorgesehen, der mit einer entsprechenden Ausnehmung im Bereich des Führungsschachtes 16 mit der Führungseinrichtung 14 in Eingriff kommt. An der Unterseite des Arretierelements 15 ist eine Anschlagfläche 18 gebildet, mit welcher ein am unteren Ende der Schubstange 5 vorgesehener Anschlag 19 bei vollständig ausgefahrener Schubstange in Anlage kommt. Im eingebauten Zustand dient eine Führungsfläche 17 am Arretierelement zur Führung der Schubstange 5 im Führungsschacht 16. Auch die in den Fig. 6 und 7 dargestellte Ausführungsform der Hubeinrichtung ermöglicht eine einfache Montage der Schubstange in der Hubeinrichtung 12. Wie beim Ausführungsbeispiel der Fig. 2 bis 5 kann die Befestigung der Hubeinrichtung 12 in den Fig. 6 und 7 zusammen mit dem Getriebe 25 an einem Gehäuse 13 der Wickeleinrichtung 2 erfolgen. Bei dem in den Fig. 6 und 7 dargestellten Ausführungsbeispiel ist ein biegbarer Antriebsstrang und eine zugeordnete Führung nicht erforderlich.

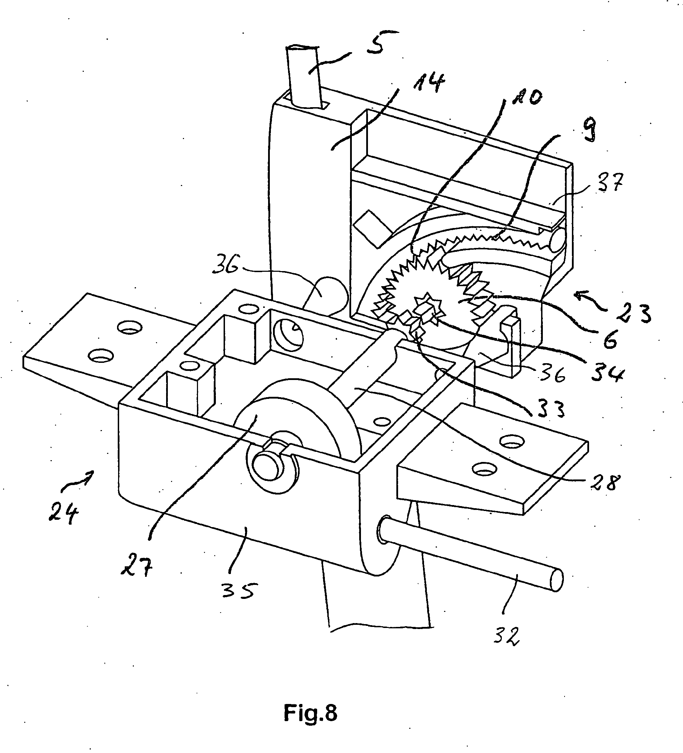

Bei dem in Fig. 8 dargestellten Ausführungsbeispiel besteht die Antriebsübertragungseinrichtung 29 für eine vereinfachte Montage im Fahrzeug, insbesondere in einer Fahrzeugtür aus zwei Bauteilegruppen 23, 24. Die erste Bauteilegruppe 23 beinhaltet im wesentlichen die Bestandteile der Hubeinrichtung 12 mit dem Antriebsrad 6. Diese erste Bauteilegruppe 23 beinhaltet somit die Schubstange 5, die Führungseinrichtung 14 für die Schubstange, den an den Führungsschacht 16 der Führungseinrichtung 14 angeschlossenen Auslaufschacht 22, den Antriebsstrang 10 und die zugeordnete Führungseinrichtung 11 des biegbaren Antriebsstranges 10. Die erste Bauteilegruppe 23 ist als vormontierte Baueinheit an einem Baugruppengehäuse 37 vorgesehen. Am Baugruppengehäuse 37 sind Zentriermittel 36 in Form von Zentrierkegeln oder Zentriernasen befestigt. Die in der Fig. 8 dargestellte Bauteilegruppe 23 beinhaltet die Bauteile des Ausführungsbeispiels der Fig. 2 der Hubeinrichtung. Es ist jedoch auch möglich, die Bauteile des in den Fig. 6 und 7 dargestellten Ausführungsbeispiels der Hubeinrichtung 12 als vormontierte Bauteilegruppe 23 vorzusehen.

Die zweite Bauteilegruppe 24 besteht im wesentlichen aus dem Getriebe 25, welches im Getriebegehäuse 35 angeordnet ist. Wie aus Fig. 8 zu ersehen ist, befindet sich die Trennstelle zwischen der ersten Bauteilegruppe 23 und der zweiten Bauteilegruppe 24 zwischen dem Getriebe 25 und dem Antriebsrad 26. Beim dargestellten Ausführungsbeispiel besitzt hierzu die Verbindungswelle 28 an ihrem mit dem Antriebsrad 6 zu verbindenden Ende einen Vielzahn 33. Das Antriebsrad 6 weist hierzu einen angepassten Vielzahneingriff 34 in der Radmitte auf. Die beiden vormontierten Bauteilegruppe 23, 24 können bei der Montage der Türverkleidung zusammengefügt werden. Dabei wird der Vielzahn 33 an der Verbindungswelle 28 mit dem Vielzahneingriff 34 am Antriebsrad 6 in Eingriff gebracht und dabei das Getriebe 25 mit dem Antriebsrad 6 verbunden. Die Zentriermittel 36 am Baugruppengehäuse 37 dienen dabei als Montagehilfe und zum Toleranzausgleich.

Die vormontierte Bauteilegruppe 23 kann dabei am Rohbau der Fahrzeugtür befestigt sein. Mit dem Getriebegehäuse 35 kann das Gehäuse 13 der Wickeleinrichtung 2 verbunden sein.

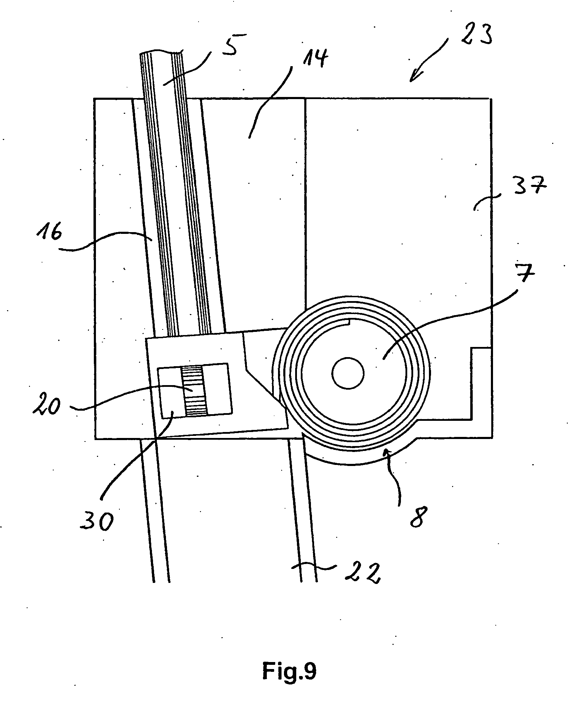

Wie aus Fig. 9 zu ersehen ist, kann die vormontierte Bauteilegruppe 23 anstelle eines als Zahnrad ausgebildeten Antriebsrades auch ein als Seilrolle ausgebildetes Antriebsrad 7 aufweisen. Die Antriebskraft zum Ausziehen der Schubstange 5 wird dann mittels eines Zugseiles eines Seiltriebes 8 übertragen. Das Seilende des Seiltriebes 8 ist hierzu mit dem Verbindungsteil 30 verbunden. Die Führung der Schubstange 5 und des Verbindungsteiles 30 erfolgt wie bei den vorherigen Ausführungsbeispielen in einer Führungseinrichtung 14 mit dem Führungsschacht 16 und dem dazu fluchtenden Auslaufschacht 22. Die Baugruppe 23 ist ebenfalls an einem Baugruppengehäuse 37 vorgesehen.

### Bezugszeichenliste

- 1: Rollobahn
- 2: Wickeleinrichtung
- 3: Rollobahnende (Zugstab)
- 4: Antriebseinrichtung (Elektromotor)
- 5: Schubstange
- 6: Antriebsrad (Zahnrad)
- 7: Antriebsrad (Seilrolle)
- 8: Seiltrieb
- 9: Verzahnung
- 10: Antriebsstrang
- 11: Führungseinrichtung für Antriebsstrang
- 12: Hubeinrichtung
- 13: Gehäuse der Wickeleinrichtung
- 14: Führungseinrichtung für Schubstange
- 15: Arretierelement
- 16: Führungsschacht
- 17: Führungsfläche am Arretierelement
- 18: Anschlagelement am Arretierelement
- 19: Anschlag an der Schubstange
- 20: Eingriffsteil
- 21: selbsttätige Arretiereinrichtung
- 22: Auslaufschacht
- 23: vormontierte Bauteilegruppe
- 24: vormontierte Bauteilegruppe
- 25: Getriebe
- 26: Zahnradgetriebe
- 27: Ausgangszahnrad
- 28: Verbindungswelle
- 29: Antriebsübertragungseinrichtung
- 30: Verbindungsteil
- 31: Schnecke
- 32: flexible Welle
- 33: Vielzahn
- 34: Vielzahneingriff
- 35: Getriebegehäuse
- 36: Zentriermittel (Zentrierkegel)
- 37: Baugruppengehäuse
- 38: federnder Arretiervorsprung

## Patentansprüche

1. Fahrzeugfensterrollo mit einer Rollobahn zum zumindest teilweisen Abdecken eines Fahrzeugfensters, einer Wickeleinrichtung zum Auf- und Abwickeln der Rollobahn, einer Hubeinrichtung, welche am ein- und ausziehbaren Rollobahnende angreift, und einer Antriebseinrichtung, welche die Hubeinrichtung antreibt, wobei die Hubeinrichtung (12) wenigstens eine Schubstange (5) aufweist, welche mit dem aus- und einziehbaren Rollobahnende (3) verbunden ist und die Schubstange über eine Antriebsübertragungseinrichtung (29) mit der Antriebseinrichtung (4) in Antriebsverbindung steht- und wobei
die Antriebsübertragungseinrichtung (29) ein Antriebsrad (6; 7) aufweist, mit welchem die Schubstange (5) in Antriebsverbindung steht, wobei
die Schubstange (5) über eine Verzahnung (9) mit dem als Zahnrad ausgebüdeten Antriebsrad (6) in Antriebsverbindung steht und
die Verzahnung (9) an einem mit der Schubstange (5) fest verbundenen biegbaren Antriebsstrang (10) vorgesehen ist und eine Führungseinrichtung (11), in welcher der Antriebsstrang (10) geführt ist, außerhalb der abzudeckenden Fensterfläche, insbesondere unterhalb einer unten liegenden Kante der abzudeckenden Fensterfläche angeordnet ist,
**dadurch gekennzeichnet, dass** die von der Antriebseinrichtung (4) erzeugte Antriebskraft über ein Verbindungsteil (30) auf die Schubstange (5) übertragen wird und
das Verbindungsteil (30) die beiden unten liegenden Enden der Schubstange (5) und des Antriebsstranges (10) miteinander verbindet.

2. Fensterrollo nach Anspruch 1, **dadurch gekennzeichnet, dass** die Verzahnung (9) an der Schubstange (5) vorgesehen ist.

3. Fensterrollo nach Anspruch 1 oder 2, **dadurch gekennzeichnet, dass** die Schubstange (5) über einen Seiltrieb (8) mit dem als Seilrolle ausgebildeten Antriebsrad (7) in Antriebsverbindung steht.

4. Fensterrollo nach einem der Ansprüche 1 bis 3, **dadurch gekennzeichnet, dass** die Schubstange (5) auswechselbar in der Hubeinrichtung (12) angeordnet ist.

5. Fensterrollo nach einem der Ansprüche 1 bis 4, **dadurch gekennzeichnet, dass** die Schubstange (5) in einer mit einem Gehäuse (13) der Wickeleinrichtung (2) fest verbundenen Führungseinrichtung (14) in vertikaler Richtung geführt ist.

6. Fensterrollo nach Anspruch 5, **dadurch gekennzeichnet, dass** die Führungseinrichtung (14) ein lösbares Arretierelement (15) aufweist, welches in einem Führungsschacht (16) der Führungseinrichtung (14) eine Führungsfläche (17) für die Schubstange (5) bildet.

7. Fensterrollo nach Anspruch 5 oder 6, **dadurch gekennzeichnet, dass** das lösbare Arretierelement (15) eine Anschlagfläche (18) aufweist, an welcher die Schubstange (5) mit einem Anschlag (19) bei voller Auszugslänge anliegt.

8. Fensterrollo nach einem der Ansprüche 1 bis 7, **dadurch gekennzeichnet, dass** das Verbindungsteil (30) in der Antriebsübertragungseinrichtung (29), insbesondere in einem unterhalb der abzudeckenden Fensterfläche angeordneten Auslaufschacht vormontierbar ist.

9. Fenstenrollo nach einem der Ansprüche 1 bis 8, **dadurch gekennzeichnet, dass** die Schubstange (5) mit dem vormontierten Verbindungsteil (30) für die Bewegungen in beiden vertikalen Richtungen verbunden ist oder zu verbinden ist.

10. Fensterrollo nach einem der Ansprüche 1 bis 9, **dadurch gekennzeichnet, dass** der Antriebsstrang (10) oder der Seiltrieb (8) mit dem vormontierten Verbindungsteil (30) verbunden ist oder zu verbinden ist.

11. Fensterrollo nach einem der Ansprüche 1 bis 10, **dadurch gekennzeichnet, dass** die Schubstange (5) mit dem Verbindungsteil (30) lösbar zu verbinden ist.

12. Fensterrollo nach einem der Ansprüche 1 bis 11, **dadurch gekennzeichnet, dass** die Antriebsübertragungseinrichtung (29), insbesondere der Antriebsstrang (10) oder der Seiltrieb (8) mit dem Verbindungsteil (30) lösbar zu verbinden sind.

13. Fensterrollo nach einem der Ansprüche 1 bis 12, **dadurch gekennzeichnet, dass** ein in das Verbindungsteil (30) einsetzbares Eingriffsteil (20) der Schubstange (5) durch Verdrehen in eine Eingriffsstellung zum Verbinden der Schubstange (5) mit dem Verbindungsteil (30) bewegbar ist.

14. Fensterrollo nach einem der Ansprüche 1 bis 13, **dadurch gekennzeichnet, dass** die Schubstange (5) und/oder der Antriebsstrang (10) durch eine selbsttätige Arretiereinrichtung (21) mit dem Verbindungsteil (30) verbindbar sind oder ist

15. Fensterrollo nach einem der Ansprüche 1 bis 14, **dadurch gekennzeichnet, dass** eine einzige Schubstange (5) vorgesehen ist, welche etwa mittig am ausziehbaren Rollobahnende (3) angreift.

16. Fensterrollo nach Anspruch 15, **dadurch gekennzeichnet, dass** die Schubstange (5) mit dem ausziehbaren Rollobahnende (3) lösbar verbunden ist.

17. Fensterrollo nach einem der Ansprüche 1 bis 16, **dadurch gekennzeichnet, dass** die Hubeinrichtung (12) einen Auslaufschacht (22) aufweist, in weichem die Schubstange (5) unterhalb der abzudeckenden Fensterfläche geführt ist.

18. Fensterrollo nach Anspruch 17, **dadurch gekennzeichnet, dass** das Verbindungsteil (30) Im Auslaufschacht (22) vormontierbar ist.

19. Fensterrollo nach einem der Ansprüche 1 bis 18, **dadurch gekennzeichnet, dass** die Antriebsübertragungseinrichtung (29) zwei Bauteilegruppen (23, 24) aufweist, von denen die erste Bautellegruppe (23) mit der Hubeinrichtung (12) eine vormontierte Baueinheit und die andere Bautellegruppe (24) eine mit der Antriebseinrichtung (4) vormontierbare Baueinheit bildet.

20. Fensterrollo nach anspruch 19, **gekennzeichnet durch** seine Ausbildung für einen Einbau in eine Fahrzeugtür, wobei die beiden separat vormontierten Bauteilegruppen (23, 24) bei der Montage der Türverkleidung am Türrohbau miteinander zu verbinden sind.

21. Fensterrollo nach einem der Ansprüche 19 bis 20, **dadurch gekennzeichnet, dass** die Antriebsübertragungseinrichtung (29) ein Getriebe (25) aufweist, an welchem die beiden separat vormontierten Bauteilegrupppe (23, 24) miteinander zu verbinden sind.

22. Fensterrollo nach einem der Ansprüche 19 bis 21, **dadurch gekennzeichnet, dass** die erste vormontierte Bauteilegruppe (23) der Antriebsübertragungseinrichtung (29), die Schubstange (5), die Führungseinrichtung (14) für die Schubstange (5), das Antriebsrad (6; 7) und den Antriebsstrang (10) oder den Seiltrieb (8) und die zweite vormontierte Bauteilegruppe (24) der Antriebsübertragungseinrichtung (29) ein mit der Antriebseinrichtung (4) zu verbindendes Zahnradgetriebe (26) aufweist.

23. Fensterrollo nach Anspruch 22, **dadurch gekennzeichnet, dass** die erste vormontierte Bauteilegruppe (23) ferner den Auslaufschacht (22) und das darin angeordnete Verbindungsteil (30) aufweist.

24. Fensterrollo nach einem der Ansprüche 19 bis 23, **dadurch gekennzeichnet, dass** ein Ausgangszahnrad (27) des Zahnradgetriebes (26) über eine Verbindungswelle (28) mit dem Antriebsrad (6; 7) zu verbinden ist.

25. Fensterrollo nach einem der Ansprüche 19 bis 24, **dadurch gekennzeichnet, dass** die beiden vormontierten Bauteilegruppen (23, 24) am Ausgang des Getriebes (25), insbesondere am Ende der Ausgangswelle (28) in Drehantriebsverbindung zu bringen sind.

## Claims

1. A blind for a vehicle window having a blind for at least partially covering vehicle window, a winding device for winding and unwinding the blind, a lifting device that engages with the extensible and retractable blind end, and a driving device that drives the lifting device, wherein the lifting device (12) has at least one push rod (5) that is connected to the extensible and retractable blind end (3), and the push rod is connected in driving manner to the driving device (4) via a drive transmission device (29), and wherein
the drive transmission device (29) has a drive wheel (6; 7) with which the push rod (5) is connected in driving manner, wherein
the push rod (5) is connected in driving manner to the drive wheel (6), which has the form of a toothed wheel, via a toothed element (9), and
the toothed element (9) is provided on a flexible drive assembly (10) that is attached permanently to the push rod (5), and a guide device (11) in which the drive assembly (10) is guided is arranged on the outside of the window surface to be covered, particularly below a bottom edge of the window surface to be covered,
**characterized in that** the driving force generated by the driving device (4) is transmitted to the push rod (5) via a connecting element (30), and
the connecting element (30) connects the two bottom ends of the push rod (5) and the drive assembly (10) to each other.

2. The window blind as recited in claim 1, **characterized in that** the toothed element (9) is provided on the push rod (5).

3. The window blind as recited in claim 1 or 2, **characterized in that** the push rod (5) is connected in driving manner to the drive wheel (7), which has the form of a sheave, via a rope drive (8).

4. The window blind as recited in any of claims 1 to 3, **characterized in that** the push rod (5) is arranged in replaceable manner in the lifting device (12).

5. The window blind as recited in any of claims 1 to 4, **characterized in that** the push rod (5) is guided vertically in a guiding device (14) that is connected permanently to a housing (13) of the winding device (12).

6. The window blind as recited in claim 5, **characterized in that** the guidance device (14) has a releasable locking element (15) that forms a guiding surface (17) for the push rod (5) in a guidance shaft (16) of the guidance device (14).

7. The window blind as recited in claims 5 or 6, **characterized in that** the releasable locking element (15) has an abutment surface (18) on which the push rod (5) lies flush with a limit stop (19) when fully extended.

8. The window blind as recited in any of claims 1 to 7, **characterized in that** the connecting element (30) can be preassembled in the drive transmission device (29), particularly in a vertical chute arranged below the window surface that is to be covered.

9. The window blind as recited in any of claims 1 to 8, **characterized in that** the push rod (5) is or can be connected to the preassembled connecting element (30) for movements in both vertical directions.

10. The window blind as recited in any of claims 1 to 9, **characterized in that** the drive assembly (10) or the rope drive (8) is or can be attached to the preassembled connecting element (30).

11. The window blind as recited in any of claims 1 to 10, **characterized in that** the push rod (5) can be attached detachably to the connecting element (30).

12. The window blind as recited in any of claims 1 to 11, **characterized in that** the drive transmission device (29), particularly the drive assembly (10) or the rope drive (8) push rod (5) can be attached detachably to the connecting element (30).

13. The window blind as recited in any of claims 1 to 12, **characterized in that** an engaging element (20) of the push rod (5) that is insertable in the connecting element (30) is movable by twisting into an engaging position so that the push rod (5) connects with the connecting element (30).

14. The window blind as recited in any of claims 1 to 13, **characterized in that** the push rod (5) and/or the drive assembly (10) is or can be connected to the connecting element (30) via an automatic locking device (21).

15. The window blind as recited in any of claims 1 to 14, **characterized in that** a single push rod (5) is provided and engages approximately in the middle of the extensible blind end (3).

16. The window blind as recited in claim 15, **characterized in that** the push rod (5) is connected detachably with the extensible blind end (3).

17. The window blind as recited in any of claims 1 to 16, **characterized in that** the lifting device (12) has a vertical chute (22) in which the push rod (5) is guided below the window surface that is to be covered.

18. The window blind as recited in claim 17, **characterized in that** the connecting element (30) can be preassembled in the vertical chute (22).

19. The window blind as recited in any of claims 1 to 18, **characterized in that** the drive transmission device (29) has two component groups (23, 24), of which the first component group (23) forms a subassembly that can be preassembled together with the lifting device (12) and the second component group (24) forms a subassembly that can be preassembled together with the driving device (4).

20. The window blind as recited claim 19, **characterized by** its configuration for installation in a vehicle door, wherein the two separately preassembled subassemblies (23, 24) can be connected to one another when the door panel is fitted in the door shell.

21. The window blind as recited in either of claims 19 or 20, **characterized in that** the drive transmission device (29) has a gearbox (25) at which the two separately preassembled subassemblies (23, 24) can be connected to one another.

22. The window blind as recited in any of claims 19 to 21, **characterized in that** the first preassembled component group (23) of the drive transmission device (29) includes the push rod (5), the guidance device (14) for the push rod (5), the drive wheel (6; 7) and the drive assembly (10) or the rope drive (8), and the second preassembled component group (24) of the drive transmission device (29) includes a gear drive (26) that can be connected to the driving device (4).

23. The window blind as recited in claim 22, **characterized in that** the first preassembled component group (23) further includes the vertical chute (22) and the connecting element (30) arranged therein.

24. The window blind as recited in any of claims 19 to 23, **characterized in that** an output toothed wheel (27) of the gear drive (26) can be connected to the drive wheel (6; 7) via a connecting shaft (28).

25. The window blind as recited in any of claims 19 to 24, **characterized in that** the two preassembled component groups (23, 24) can be attached to the output of the gearbox (25), particularly to the end of the output shaft (28) in a rotary driving connection.

## Revendications

1. Store de fenêtre de véhicule avec une bande de store pour le recouvrement au moins partiel d'une fenêtre de véhicule, un dispositif d'enroulement pour l'enroulement et le déroulement de la bande de store, un dispositif de levage, lequel vient en prise sur l'extrémité de la bande de store étirable et relevable, et avec un dispositif d'entraînement, lequel entraîne le dispositif de levage, le dispositif de levage (12) présentant au moins une tringlerie de poussée (5), laquelle est reliée à l'extrémité de la bande de store (3) étirable et relevable, et la tringlerie de poussée étant en liaison d'entraînement via un dispositif de transmission de mouvement (29) avec le dispositif d'entraînement (4), et
le dispositif de transmission de mouvement (29) présentant une roue d'entraînement (6 ; 7) avec laquelle la tringlerie de poussée (5) est en liaison d'entraînement,
moyennant quoi la tringlerie de poussée (5) est en liaison d'entraînement via une denture (9) avec la roue d'entraînement (6) réalisée en tant que roue dentée, et
la denture (9) étant prévue sur une barre d'entraînement (10) flexible reliée de manière fixe à la tringlerie de poussée (5) et avec un dispositif de guidage (11) dans lequel la barre d'entraînement (10) est guidée, à l'extérieur de la surface de fenêtre à recouvrir, en particulier en-dessous d'une arête située sur le bas de la surface de fenêtre à recouvrir,
**caractérisé en ce que** la force d'entraînement générée par le dispositif d'entraînement (4) est transmise par l'intermédiaire d'un élément de liaison (30) à la tringlerie de poussée (5) et
**en ce que** l'élément de liaison (30) relie ensemble les deux extrémités situées sur le bas de la tringlerie de poussée (5) et de la barre d'entraînement (10).

2. Store de fenêtre de véhicule selon la revendication 1, **caractérisé en ce que** la denture (9) est prévue sur la tringlerie de poussée (5).

3. Store de fenêtre de véhicule selon la revendication 1 ou 2, **caractérisé en ce que** la tringlerie de poussée (5) est en liaison d'entraînement par l'intermédiaire d'un entraînement par câble (8) avec la roue d'entraînement (7) réalisée en tant que poulie.

4. Store de fenêtre de véhicule selon l'une quelconque des revendications 1 à 3, **caractérisé en ce que** la tringlerie de poussée (5) est disposée de manière échangeable dans le dispositif de levage (12).

5. Store de fenêtre de véhicule selon l'une quelconque des revendications 1 à 4, **caractérisé en ce que** la tringlerie de poussée (5) est guidée en direction verticale dans un dispositif de guidage (14) relié de manière fixe à un boîtier (13) du dispositif d'enroulement (2).

6. Store de fenêtre de véhicule selon la revendication 5, **caractérisé en ce que** le dispositif de guidage (14) présente un élément d'arrêt amovible (15), lequel forme une surface de guidage (17) pour la tringlerie de poussée (5) dans une gaine de guidage (16) du dispositif de guidage (14).

7. Store de fenêtre de véhicule selon la revendication 5 ou 6, **caractérisé en ce que** l'élément d'arrêt amovible (15) présente une surface de butée (18) contre laquelle la tringlerie de poussée (5) repose avec une butée (19) en cas de longueur complète d'étirage.

8. Store de fenêtre de véhicule selon l'une quelconque des revendications 1 à 7, **caractérisé en ce que** l'élément de liaison (30) peut être monté préalablement dans le dispositif de transmission de mouvement (29), en particulier dans une gaine de sortie disposée en-dessous de la surface de fenêtre à recouvrir.

9. Store de fenêtre de véhicule selon l'une quelconque des revendications 1 à 8, **caractérisé en ce que** la tringlerie de poussée (5) est reliée à l'élément de liaison (30) prémonté pour les mouvements dans les deux directions verticales, ou bien doit être relié à celui-ci.

10. Store de fenêtre de véhicule selon l'une quelconque des revendications 1 à 9, **caractérisé en ce que** la barre d'entraînement (10) ou bien l'entraînement par câble (8) est relié(e) à l'élément de liaison (30) prémonté, ou bien doit être relié(e) à celui-ci.

11. Store de fenêtre de véhicule selon l'une quelconque des revendications 1 à 10, **caractérisé en ce que** la tringlerie de poussée (5) doit être reliée de manière mobile à l'élément de liaison (30).

12. Store de fenêtre de véhicule selon l'une quelconque des revendications 1 à 11, **caractérisé en ce que** le dispositif de transmission de mouvement (29), en particulier la barre d'entraînement (10) ou l'entraînement par câble (8), doivent être reliés de manière mobile à l'élément de liaison (30).

13. Store de fenêtre de véhicule selon l'une quelconque des revendications 1 à 12, **caractérisé en ce qu'**un élément d'engrènement (20) de la tringlerie de poussée (5) pouvant être inséré dans l'élément de liaison (30) peut bouger grâce à une torsion dans une position d'engrènement pour relier la tringlerie de poussée (5) à l'élément de liaison (30).

14. Store de fenêtre de véhicule selon l'une quelconque des revendications 1 à 13, **caractérisé en ce que** la tringlerie de poussée (5) et/ou la barre d'entraînement (10) peuvent être reliés par un dispositif d'arrêt automatique (21) à l'élément de liaison (30), ou bien sont reliés à celui-ci.

15. Store de fenêtre de véhicule selon l'une quelconque des revendications 1 à 14, **caractérisé en ce que** l'on prévoit une seule tringlerie de poussée (5), laquelle est en prise à peu près au milieu sur l'extrémité de la bande de store (3) étirable.

16. Store de fenêtre de véhicule selon la revendication 15, **caractérisé en ce que** la tringlerie de poussée (5) est reliée de manière mobile à l'extrémité de la bande de store étirable (3).

17. Store de fenêtre de véhicule selon l'une quelconque des revendications 1 à 16, **caractérisé en ce que** le dispositif de levage (12) présente une gaine de sortie (22), dans laquelle la tringlerie de poussée (5) est guidée en-dessous de la surface de fenêtre à recouvrir.

18. Store de fenêtre de véhicule selon la revendication 17, **caractérisé en ce que** l'élément de liaison (30) peut être prémonté dans la gaine de sortie (22).

19. Store de fenêtre de véhicule selon l'une quelconque des revendications 1 à 18, **caractérisé en ce que** le dispositif de transmission de mouvement (29) présente deux éléments modulaires (23, 24), dont le premier élément modulaire (23) forme avec le dispositif de levage (12) un module prémonté et dont l'autre élément modulaire (24) forme avec le dispositif d'entraînement (4) un module prémontable.

20. Store de fenêtre de véhicule selon la revendication 19, **caractérisé par** sa réalisation de manière à pouvoir être intégré dans une portière de véhicule, les deux éléments modulaires (23, 24) prémontés séparément devant être reliés ensemble lors du montage du revêtement de la portière sur la coque de la portière.

21. Store de fenêtre de véhicule selon l'une des revendications 19 à 20, **caractérisé en ce que** le dispositif de transmission de mouvement (29) présente un engrenage (25) sur lequel les deux éléments modulaires (23, 24) prémontés séparément doivent être reliés ensemble.

22. Store de fenêtre de véhicule selon l'une quelconque des revendications 19 à 21, **caractérisé en ce que** le premier élément modulaire (23) prémonté du dispositif de transmission de mouvement (29) présente la tringlerie de poussée (5), le dispositif de guidage (14) pour la tringlerie de poussée (5), la roue d'entraînement (6 ; 7) et la barre d'entraînement (10) ou l'entraînement par câble (8), et **en ce que** le deuxième élément modulaire (24) prémonté du dispositif de transmission de mouvement (29) présente une commande par engrenages (26) à relier au dispositif d'entraînement (4).

23. Store de fenêtre de véhicule selon la revendication 22, **caractérisé en ce que** le premier élément modulaire (23) prémonté présente par ailleurs la gaine de sortie (22) et l'élément de liaison (30) disposé à l'intérieur de celle-ci.

24. Store de fenêtre de véhicule selon l'une quelconque des revendications 19 à 23, **caractérisé en ce qu'**une roue dentée de sortie (27) de la commande par engrenages (26) doit être reliée par l'intermédiaire d'un arbre de conjugaison (28) à la roue d'entraînement (6 ; 7).

25. Store de fenêtre de véhicule selon l'une quelconque des revendications 19 à 24, **caractérisé en ce que** les deux éléments modulaires (23, 24) prémontés doivent être mis en liaison d'entraînement rotatif à la sortie de l'engrenage (25), en particulier à l'extrémité de l'arbre de sortie (28).
